(19) Europäisches Patentamt European Patent Office Office européen des brevets

(11) **EP 1 816 799 A1**

(12) **EUROPEAN PATENT APPLICATION**

(43) Date of publication:
08.08.2007 Bulletin 2007/32

(51) Int Cl.:
*H04L 12/56* (2006.01)    *H04L 12/24* (2006.01)

(21) Application number: 06002010.4

(22) Date of filing: 01.02.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: Siemens AG
80333 München (DE)

(72) Inventors:
• **Charrua, Pedro Miguel**
2625-386 Forte da Casa (PT)
• **Mendes, Eduardo José**
2625-418 Forte da Casa (PT)

(74) Representative: **Kley, Hansjörg**
Siemens AG
Postfach 22 16 34
80506 München (DE)

(54) **Method for creating a path for data transmission in a network based on network element reliability.**

(57)    A Method for creating a path for data transmission in a network is proposed, whereby:
- the reliability rate of each of a plurality of network elements is determined,
- a network element with a reliability rate above a threshold value is selected,
- a path comprising said selected network element is enabled for data transmission.

Drawing 1

**Description**

A method for creating a path for data transmission in a network, in particular within an IP (Internet Protocol) network, is presented.

Optimising data transmission in a communications network, for example by ensuring high speed data transmission, fast data download times, minimising transmission interruption and delay is a priority in networking today, as the number of IP network users continues to increase and the availability of bandwidth is limited.

MPLS (Multi Protocol Label Switching) is an IETF (Internet Engineering Task Force) proposed data-carrying mechanism, that can integrate Layer 2 information into Layer 3 of the OSI Model within an autonomous system to simplify and improve data packet exchange. It provides a unified data-carrying service for both circuit-based clients and packet-switching clients which provide a datagram service model. It can be used to carry many different kinds of traffic, including transport of Ethernet frames and IP packets.

US6665273 B1 describes a method and apparatus for an MPLS system for traffic engineering. Actual traffic flow within a traffic engineering tunnel is determined and dynamically adjusts the bandwidth to reflect the actual traffic flow. Once the actual traffic flow is known, the bandwidth is updated in accordance with the actual traffic flow.

One objective to be achieved lies in providing a method that creates a path in a network adaptively.

Another objective to be achieved lies in providing a method that efficiently creates a path in a network in dependance of the quality of data transmission required.

A method for creating a path for data transmission in a network is proposed, whereby:

- the reliability rate of each of a plurality of network elements is determined,
- a network element with a reliability rate above a threshold value is selected,
- a path comprising said selected network element is enabled for data transmission.

One way of interpreting the reliability rate is to consider it to be a measure taken over a selectable period of time in which the network element handled data within a certain quality range. The quality range is determined in consideration of factors affecting data handling such as interruption, delay, jitter, disruption, reduced capacity, interference or even data loss. Thus, the reliability rate can directly be considered to be the period of time in which a network element handled data in a manner falling within a certain quality range, which may be, for example, required by a CoS (Class of Service). A CoS may be a criterion set by a service provider or network administrative body or function, such as an NMS (Network Management System). A particular path may be desired passing through a network to ensure guaranteeing CoS or QoS (Quality of Service).

The method of creating a path through a network in the above manner has the advantage that the measure of reliability of a network element in handling data is a simple and general criterion for determining whether it should be chosen for a desired path through a network. It is a criterion which enables the consideration of a plurality data handling affecting factors. For example, if a network element is disrupted, such as for replacement or traffic re-directing purposes, or if it is insufficiently load balanced to guarantee a prescribed CoS, it may nevertheless be considered using the reliability rate if other criteria have been met, such as speed of data handling or minimal data interference or loss. Furthermore, selection of a network element to consitute part of the desired path is not stringently limited to single factors such as limited or reduced available bandwidth.

The reliability rate is preferably expressed in percentage terms, whereby the reliability rate of a network element whose data handling has not been negatively perturbed at all, at least not beyond a nominal level, is considered to be 100%. Alternatively, the reliability rate of a network element subjected to the least perturbation or disturbance can be set to 100%. The threshold value is therefore preferably a certain number in percent or constitutes the reliability rate as a factor and may be expressed in other terms.

The reliability rate may be estimated by the sum of a plurality of data handling affecting factors that emerge in networking, whereby these factors may be weighted according to the importance placed on the data handling affecting factors, such as, for example, limited bandwidth availability.

It is preferred that the reliability rate is determined in dependence on alarms, in particular on the number, frequency or length of alarms a network element has given rise to. The raising of an alarm by a network element can be logged in a file in an NMS or in another data storage medium constituting, for example, a part of a network element. Alarm raising events relevant for each network element are preferably chosen by the NMS or by a network operator or administrator.

According to a preferred extension of the method, constraints are placed on network elements with a reliability rate below a threshold value. These constraints may limit the use of a network element only for data handling within a particular CoS or for particular services. They may also lead to not using the network element at all, for example if it is disrupted or defective. The contraints are determined in dependence on network elements whose data handling is shown to be affected negatively or positively.

Next to determining the reliability rate, further criteria can be specifically and additionally considered for selecting the network element. These criteria may be set in accordance with priorities set by the NMS, service operator or provider. Examples of such criteria are:

- the source and destination of a network path,
- bandwidth requirements within the network path,
- bandwidth availability within the network path,
- the maximum number of hops that must be included in the path,
- administrative groups, also known as resource affinities within the path,
- delay and jitter between a plurality of network elements within the path,
- connectivity between a plurality of network elements within the path.

The path is created preferrably by the NMS itself based on a path selecting process initiated by automation, for example periodically or in the case where an IP service is to be upgraded to a new CoS or a new service is to be administered. The creation of the path may be triggered automatically by such events, whereby the methods used to create the data path are carried out self-sufficiently be means of criteria, network topology and network element information stored in a database or memory device to which the NMS has access.

It is preferred that the path created is suitable for data transmission of data packets suitable for transmission in an IP network. By providing the data packets with specific headers, they may be forwarded to the network elements consituting a part of the newly created desired path.

The path is preferrably created in an MPLS network, such that the network elements supporting MPLS data transmission can efficiently handle the data of an IP service. In this case, the path created can be an LSP (Label Switch Path). This path can be characterised by network elements such as links, ingress and egress switches or routers, the latter of which may be termed LSRs (Label Switch Routers) if they only or predominantly perform routing based on Label Switching. LERs (Label Edge Routers) are those belonging to the first or final network element of an LSP belonging to a network path.

The network path is preferrably a tunnel created through one or a plurality of already established paths connecting a starting network element with a destination network element. The tunnel can be characterised as defining a new path through the network with faster or more reliable data transmission compared to the established paths.

The described embodiments are further elaborated upon by means of the following drawings and examples, whereby:

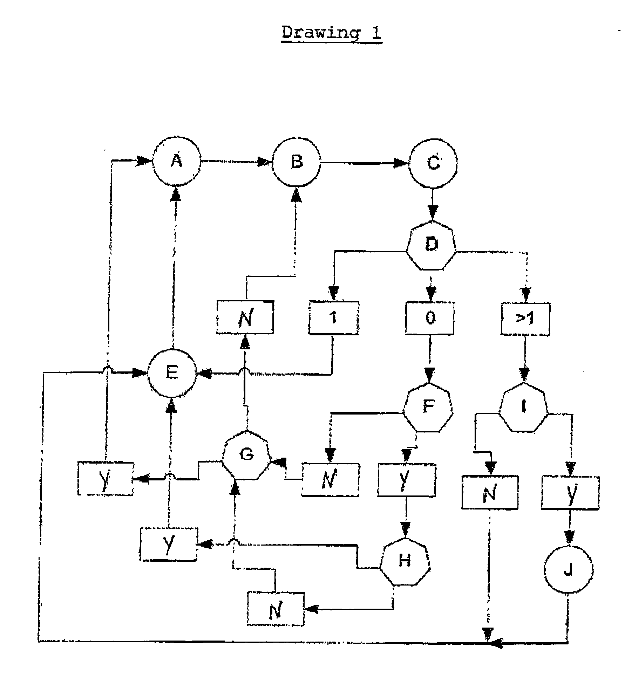

Drawing 1    shows a plurality of decision-requiring instances in a method for establishing a data-carrying path in a network.

The entry and exit points of networks described can be considered to be LERs. More generally, these can be devices acting as ingress or egress routers and may also be referred to as PE (Provider Edge) routers.

It is to be noted that the routers need not necessarily connect one network or LAN or VLAN to another, independent of whether they are LSRs or LERs in an example, so that henceforth the routers are replaceable by switches that perform forwarding tasks for data packets from one network element to another. A router is thus considered to be a particular type of switch.

When an unlabeled data packet is transmitted to and enters an ingress router, for example if it needs to be passed onto an an MPLS tunnel in the case that the transmission occurs within an MPLS network, the ingress router first determines the forwarding equivalence class that the packet should be in, and then inserts one (or more) labels in the packet's newly created MPLS header. The packet is then passed on to a next router for this tunnel. Thus, in more general terms, when packets enter an MPLS-based network, LERs can give them an identifier label. These labels not only contain information based on the routing table entry (i.e., destination, bandwidth and other metrics), but also refer to the IP header field (source IP address), Layer 4 socket number information, and differentiated service. Once this classification is complete and mapped, different packets are assigned to corresponding LSPs, where LSRs place outgoing labels on the packets. With these LSPs, an NMS or a network operator can divert and route traffic based on data-stream type.

When a labeled packet is received by a router, such as an ingress router, the topmost label of the packet is examined.

Based on the contents of the label a swap, push or pop operation can be performed on the packet's label stack.

The router is preferrably provided with a lookup-table that informs router which kind of operation should be performed on the data packet based on the topmost label of the incoming data packet.

In a swap operation, the router swaps the label of the data packet with a new label, and the data packet is forwarded along the path associated with the new label.

In a push operation, the router adds or "pushes" a new label on top of the existing label of the incoming data packet, effectively "encapsulating" the packet in another layer of labelling. This would allow the hierarchical routing of data packets, wherein routing of the packet is performed according to the instructions of the labels in the order they are in.

In a pop operation the label is removed from the packet, which may reveal an inner label below in a decapsulation process. If the popped label was the last on the label stack, the packet "leaves" the network or tunnel, in the case that one has been established,

A tunnel path can be established in a network domain, here an MPLS domain, between the two LERs. A data packet coming from a customer, client or end-user is marked with a label at the first LER. From there on, when the packet passes through an LSR, it is routed according to its label, instead of being routed by its IP address. When the data packet reaches the end LER of the network domain, the label of the data packet is removed in a pop operation and the packet can be delivered to a different network, such as a non-MPLS network, by means of the IP address left in the data packet.

When creating the tunnel through the network, if no constraints are given, the tunnel will follow the shortest path of the underlying IGP (Interior Gateway Protocol), which may be OSPF (Open Shortest Path First), which is a link-state, hierarchical IGP (Interior Gateway Protocol routing) protocol, or IS-IS (Intermediate system to Intermediate System).

If the NMS is set not to let the tunnel follow the shortest path defined by the IGP, constraints may be placed. Constraints applied to network elements would block their use, thus triggering the use of an alternative route. These contraints may be dependent on poor reliability, available bandwidth, or alternatively, they may be made to be dependent on other previously mentioned factors such as delay and jitter in the network. The said constraints might include network elements or ports of these network elements through which the traffic should or should not pass.

According to one particularly advantageous aspect of the described methods for establishing a path in an IP network, path reliability is taken into account to determine the configuration of constraints in the network. It is preferred that the path reliability be determined based on fault statistics in any given network or part of network. Such statistics may include alarms, that is, the frequencies of alarm occurrence, the respective severities of the alarm-causing event indicated by the alarm, or the length of time the alarm has or had been raised.

Such a method can advantageously be implemented in a network comprising network elements with data-storage means, such as in an NMS, whereby the data-storage means may comprise alarm logs or alarm lists. Such logs or lists can also comprise information regarding alarm severity, alarm counters, alarm times along with the identity of affected elements, such as affected network elements such as cards, ports or data links. Such a method would not require making alterations to existing network element hardware or program products mounted in or used in connection with them.

An MPLS network is preferred, as it provides a system for interpretation of data packet labels that enables particularly efficient forwarding and transmission of data packets. Other networks, in particular IP networks, may however also be used.

It has been found by the inventors that the following criteria are particularly useful when contraints are made dependent on them:

- the source and destination of a network route,
- bandwidth requirements,
- bandwidth availability,
- the maximum number of hops that must be included in a route,
- administrative groups, also known as resource affinities
- delay and jitter between a plurality of network elements,
- connectivity between a plurality of network elements.

The factor of available bandwidth is considered to be particularly useful for those cases where resource reservation is a criterion for managing a network by a provider or NMS.

The contraints mentioned above can be manually pre-configured in the ingress node for the TE tunnel to be established,

In the case of resource affinities, the constraints may also be manually configured, in particular in all the ports of the nodes that will belong to the MPLS network. In this case, an operator or an NMS configures the entire MPLS tunnel network.

The manual configuration can thus take place anywhere it is required and is easily executed.

The configuraton preferably takes place at a low-level of the network, such as the CLI-level. The enables simple handling or integration of functions for handling path creation.

It is further proposed to make a constraint dependent on delay and jitter within a network, whereby delay and jitter are parameters which were found could be wholly independent of available bandwidth. Instead, since it was found that many more parameters other than the available bandwidth might affect delay and jitter, such as for example switching mode, or queuing modes, the creation of tunnels that respect given delay parameters can be used to manage a network or at least parts of a network efficiently.

One way to interpret jitter is to consider it to be an abrupt and unwanted variation of one or more signal characteristics, such as the interval between successive pulses, the amplitude of successive cycles, or the frequency or phase of successive cycles. More specifically, in networking, in particular IP networks such as the Internet, jitter can be understood as being a variation or statistical dispersion in the delay of the packets due, for example, to routers' internal queues behaviour in certain circumstances, and / or routing changes.

With constraints dependent on the said different factors, an NMS or an operator of the relevant network is advantageously enabled to direct the traffic in order not to follow an existing established path that may be plagued with delays, interruptions, interference or disruptions.

With reference to drawing 1, the following 3 scenarios are generally considered, where there may be only one, more than one or no LSPs meeting the criteria set by a CoS or service provider.

In the first case, since only one LSP is available, the NMS will configure this LSP.

In the second case of more than one possible LSP being available, the final LSP configuration will fall onto the LSP that has the best reliability rate. Still in this case, if two or more of the best LSPs have the same reliability rate, the final LSP selection will be the one with the larger available bandwitdh. This way, load balancing will be done automatically.

Finally, when no LSP is available according to the desired CoS (the available LSP does not meet Reliability Rate / CoS requirements), there may be other LSPs that could fit but for a minor (or major) CoS. The operator or NMS is then informed of this occurrence, and the NMS then preferably signals that the LSP can be configured (there in an LSP with available bandwidth), but that the CoS is not the one desired. The NMS or operator may then decide whether the setting of a new path or tunnel through the network will be performed based on the present configuration or not. In this manner, a Denial of Service will only occur if so desired by the NMS or the operator. If the NMS or operator chooses to continue, the LSP to be configured will be the one that has the most similar reliability rate.

A fully customised table with a CoS / Reliability Rate relation is preferably offered to the NMS or operator to define. Initially, it can be filled with a number of default values.

The following table shows possible ranges established for reliability rates for the several CoS.

| Reliability Rate (%) | CoS |
| --- | --- |
| 100% - 91% | 7 |
| 90% - 76% | 6 |
| ... | ... |
| 10% - 0% | 0 |

For example, if the NMS or operator desires meeting a CoS of 7, it can be seen in the table above that the reliability rate must be between 100% and 91%. If an LSP with a reliability rate of only 75% is available, then the NMS or the operator will be informed of this. If the NMS or operator chooses to, this will be the configured LSP. It may occur that no LSP is available, even for other CoSs. In this case, the NMS or operator is notified and the process is terminated or restarted, for example with other CoS requirements.

Since the ranges for the reliability rates are easily changed by the NMS or operator, adaptivity is given to the method for allocating network path to services in a particular CoS.

**Drawing 1** also shows the steps involved in the method more specifically. "A" shows an idle state in which no values are requested or determined. "B" indicates that an operator or NMS requires an LSP configuration based on desired constraints. C indicates that a list of possible LSPs is determined. D indicates that a number of LSPs have been found.

The box following "D" containg the value 1 shows the situation where only 1 LSP meeting certain criteria has been found. In this case, the selected LSP is configured in the network element, indicated by "E". After this, an idle state "A" is assumed until another query "B" is initiated.

The box following "D" containing the value 0 shows the situation where no LSP has been found. Following the box containing the value 0 is the box indicated with "F", which shows the situation where the availability of other configurable LSPs, despite the desired CoS, is considered. If there are no other configurable LSPs, shown by the box following "F" which is indicated by "N" (no), situation "G" arises, where it is considered whether to end the process or not. If so, indicated by the box following "G" and indicated by "Y" (yes), the process is returned to the idle state "A" where no queries, requests or other LSP-search related functions are initiated. If, on the other hand, the process is not to be terminated (indicated by the box "N" following "G"), then the next situation is given by "G", where an operator again requires LSP configuration based on desired constraints.

The case where there is another LSP available that can be configured, despite the desired CoS, is shown by the box "Y" following the box "F". In this case, the situation arises where the operator or NMS considers whether to accept this alternative LSP or not.

If the alternative LSP is accepted, which is the situation shown by the box "Y" following "H", then the selected LSP is configured in the network element, which is shown by "E". Thereafter, then process returns to the idle state "A".

If, on the other hand, the alternative LSP is not accepted by the operator or NMS, which is the situation shown by the box "N" following "H", then it is determined whether to end the process (shown by the "Y" after "G") and return to the idle state "A" or alternatively to continue the process (shown by the "N" after "G") and return to the process initiating state "B".

The box following "D" and indicating a value >1 shows the situation where more than one possible LSP meeting the criteria has been found. In this case, it is determined whether two or more LSPs with the same Reliability Rate exist, a situation indicated by "I".

If two or more LSPs with the same Reliability Rate exist, which is the situation marked by the following box "Y" (yes), then the LSP meeting other criteria, such as highest available bandwith, least jitter or delay is determined and selected. After this, the selected LSP is configured in the network element, which is shown by "E". Thereafter, since an appropriate LSP has been found and all criteria have been met, the process returns to the idle state "A".

If, on the other hand, no two or more LSPs with the same reliability rate exist, which is the situation marked by the following box "N" (no), then no further criteria need be used to select an LSP and the situation "E" arises where the LSP with the highest Reliability Rate is configured in the network element. Thereafter the process returns to the idle state "A." .

More specifically, an NMS can assign one coefficient to each link or other network element, such as a port or switch, of a network backbone. For the specific case the network is an MPLS network, the weight of an LSP is obtained by adding the coefficients of all the network elements, in particular links, that compose it. The lower the coefficient of the LSP is, the more this LSP will be considered as constituting an element of the desired network path. By determining the final weight of an LSP by adding the coefficients of every single link that compose it, the number of hops is taken into account correspondingly.

For example, if an LSP is composed of a link with the fewest alarms of the MPLS network, and is composed of only one hop, then this link will be considered the most appropriate LSP for the desired path or tunnel. Hence, OSPF can be assured.

As previously mentioned, the coefficient is determined with the use of fault statistics. Thus, an operator of the network or an NMS may be given the means of deciding whether the aging of the alarms is to be considered for the coefficient determination.

For example, the operator or NMS may only wish to take into account alarms that were raised some hours previously. When determining the coefficient, the fault statistics of a newly installed network are preferrably not taken into account, as these may be accompanied by the usual increased number of technical glitches. In this specific case, and since it is necessary that the link coefficient be different from zero, some predefined value different from zero is assigned to every link which has no alarms associated with it.

This method may lead to an LSP being chosen a number of times and being chosen as being a part of several MPLS tunnels. This could lead to this LSP having to head an increased level of traffic. However, load balancing will be possible such that every service carried by the network can be given a certain priority, depending, for example, on the CoS. Thus, non-priority services will go through the second best LSP, and so on.

An NMS database is proposed wherein a table of all the links with their respective attributes is stored. The respective attributes may all be called physical trails. The table comprises entries of physical trails coefficients (MPLS_COEP(i)) for the establishment of an MPLS tunnel. The physical trail coefficients can be determined according to the following relation:

$$MPLS\_COEF(i) = A_1 \times CRIT_i + A_2 \times MAJ_i + A_3 \times MIN_i * A_4 \times WARN_i +$$
$$A_3 \times IDNT_i + ...$$

where

- *i* comprises all values from 1 to *N*,
- *N* is the entry index number of a physical trail in the table,
- $A_i$ is the alterable (by the NMS or operator) alarm weight for each severity, whereby the number of different severities range from 1 to *M* chosen by the operator, NMS or are pre-defined,

- *CRIT, MAJ, MIN, WARN,* and *INDT* stand for the number of alarms for the links with the alarm severities critical, major, minor, warning and indeterminate, respectively.

The NMS or operator can be given the option to select a "since what time" criterion, which establishes since what time the alarms are to be taken into account.

If there are no alarms for one physical trail (MPLS_COEFF (i) = 0), the coefficient is automatically set to be a value different from zero. This prevents a "division by zero" operation from occuring in calcuations using the coefficient as a term or variable.

The operator of an NMS may choose source (ingress) and destination (egress) network elements, along with the corresponding ports for the tunnel establishment. Bandwidth reservation value and desired CoS can also be inputted at this stage. The determination of a new tunnel through the network that connects the ingress and egress network elements can thus begin with this initial information.

Every physical trail that has enough available bandwidth to meet operator requirements for a specific network service can be marked as a possible physical trail for the LSP. Then, every possible LSP that can connect the ingress and egress network elements chosen as above are determined.

A further table may be provided to keep a list of LSP coefficients, whereby for every LSP, its respective coefficient is determined preferrably according to the following method.

The LSP coefficient can be considered to comprise the sum of the coefficients of all the physical trails, such that:

$$LSP\_COEF(j) = \Sigma\ MPLS\_COEF(i)$$

After completion of this procedure, the NMS is provided with a list of all possible LSPs and their respective coefficients. This is sufficient for determining the reliability rate of all LSPs.

The reliability rate is preferrably calculated using the following relation:

$$ReliabilityRate(i)_{[\%]} = (1-((\ LSP\_COEF(i)-(\ LSP\_COEF)^{min})/$$
$$LSP\_COEF(i))\ \times\ 100$$

This relation indicates that it is useful to make use of another table containing all the possible LSPs and their respective reliability rates. The factor (*LSP_COEFF*)$^{min}$ stands for the minimum coefficient of every LSP, that is, the preferred LSP. For the LSP that has the preferred *LSP_COEFF,* its reliability rate will be 100% compared with remaining LSPS.

Once the reliability rate has been determined, the NMS or operator is presented with the final results. The number of entries in the table will depend on the correspondence table Reliablity Rate / CoS shown previously, and the CoS and bandwidth selected. The source and ingress network elements will also limit the number of possible LSPs, since connectivity is best guaranteed.

At the end, the NMS will have the possibility to automatically configure constraints in the network elements, such that the route for the new tunnel can be established on the fly.

One advantage encompassed by the described method is that both the operators and developers of program products on which the method is mounted can benefit from rapid tunnel selection without requiring a comprehensive overview over a network.

The described methods have the further advantage that the work of correctly configuring an MPLS network with tunnels is turned into an automatic procedure, with which load balancing is effectively performed.

List of Abbreviations

A    idle
B    operator or NMS requires LSP configuration based on desired constraints
C    determination of list of possible LSPs

D    query as to the number of found LSPs
E    configuration of selected LSP
F    query as to whether another LSP is available that can be configured despite the desired CoS
G    query as to whether process should be ended
H    query as to whether operator or NMS accepts another LSP despite the desired CoS
I    query as to the existence of multiple LSPs with the same reliability rate
J    selection of the LSP meeting criteria other than that of reliability rate

Y    yes

N    no

**Claims**

1. Method for creating a path for data transmission in a network, whereby :

    - the reliability rate of each of a plurality of network elements is determined,
    - a network element with a reliability rate above a threshold value is selected,
    - a path comprising said selected network element is enabled for data transmission.

2. Method according to claim 1, whereby contraints are placed on network elements with a reliability rate below a threshold value.

3. Method according to one of the claims 1 or 2, whereby the created path comprises network elements with reliability rates satisfying criteria of a Class of Service (CoS).

4. Method according to one of the preceding claims, whereby alarms indicating events affecting a network element's handling of data are stored in a memory device.

5. Method according to claim 4, whereby the stored alarms are provided with information as to the nature and severity of the event affecting the network element's handling of data.

6. Method according to claim 5, whereby the reliability rate is determined in dependence of the alarms associated with a network element.

7. Method according to one of the preceding claims, whereby the reliability rate is determined in dependence of events affecting the data handling of a network element.

8. Method according to one of the preceding claims, whereby along with the reliability rate, at least one of the following criteria is used to select the network element:

    - the source and destination of the path,
    - bandwidth requirements within path,
    - bandwidth availability within the path,
    - the maximum number of hops to be included in the path,
    - administrative groups resource affinities within the path,
    - delay and jitter between a plurality of network elements within the path,
    - connectivity between a plurality of network elements within the path.

9. Method according to one of the preceding claims, whereby the creation of the path is executed by a network management system (NMS).

10. Method according to one of the preceding claims, whereby the path is created in an IP network.

11. Method according to one of the preceding claims, whereby the path is created in an MPLS network.

12. Method according to one claim 11, whereby the path comprises a Label Switch Path (LSP).

**13.** Method according to one of the preceding claims, whereby the network elements comprise switches.

**14.** Method according to one of the preceding claims, whereby the network elements comprise links.

**15.** Method according to one of the preceding claims, wherey the network elements comprise routers.

**16.** Method according to claim 15, whereby the routers comprise Label Edge Routers.

**17.** Method according to one of the claims 15 or 16, whereby the routers comprise Label Switch Routers.

Drawing 1

European Patent Office

## EUROPEAN SEARCH REPORT

Application Number

EP 06 00 2010

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 0 841 824 A (NEC CORPORATION) 13 May 1998 (1998-05-13)<br>* claims 5,6,8,10 *<br>* column 1, lines 16-44 *<br>----- | 1,2,4,5, 7-17<br>3 | INV.<br>H04L12/56<br>H04L12/24 |
| Y | EP 1 056 246 A (AT&T CORP) 29 November 2000 (2000-11-29)<br>* abstract; claim 1 *<br>----- | 3 | |
| X | US 5 521 910 A (MATTHEWS ET AL) 28 May 1996 (1996-05-28)<br>* abstract; claims 1-8,18 *<br>----- | 1,2,8, 14,15 | |
| X | WO 03/090083 A (MESHNETWORKS, INC; SCHMIDT, JEFFREY, C; WHITE, ERIC, D) 30 October 2003 (2003-10-30)<br>* abstract *<br>* paragraphs [0017], [0026] - [0030]; claims 1,4,5; figure 3 *<br>----- | 1,2,14 | |
| X | US 2004/264372 A1 (HUANG LEPING) 30 December 2004 (2004-12-30)<br>* abstract *<br>* paragraphs [0054] - [0057]; figure 4 *<br>----- | 1,2,14 | TECHNICAL FIELDS SEARCHED (IPC)<br><br>H04L |
| A | WO 03/058868 A (EINFINITUS TECHNOLOGIES, INC; TANDON, SIDDHARTH; BANSAL, JAYANT) 17 July 2003 (2003-07-17)<br>* abstract; claims 1,2,7 *<br>----- | 11,12, 16,17 | |

The present search report has been drawn up for all claims

| Place of search | Date of completion of the search | Examiner |
|---|---|---|
| Munich | 27 April 2006 | Jimenez Hernandez, P |

EPO FORM 1503 03.82 (P04C01)

## ANNEX TO THE EUROPEAN SEARCH REPORT
## ON EUROPEAN PATENT APPLICATION NO.

EP 06 00 2010

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2006

| Patent document cited in search report | | Publication date | Patent family member(s) | | Publication date |
|---|---|---|---|---|---|
| EP 0841824 | A | 13-05-1998 | CA | 2220469 A1 | 08-05-1998 |
| | | | JP | 2985940 B2 | 06-12-1999 |
| | | | JP | 10145362 A | 29-05-1998 |
| | | | US | 6026077 A | 15-02-2000 |
| EP 1056246 | A | 29-11-2000 | CA | 2308962 A1 | 27-11-2000 |
| | | | US | 6590867 B1 | 08-07-2003 |
| US 5521910 | A | 28-05-1996 | AT | 205652 T | 15-09-2001 |
| | | | AU | 678687 B2 | 05-06-1997 |
| | | | AU | 1607895 A | 15-08-1995 |
| | | | AU | 681062 B2 | 14-08-1997 |
| | | | AU | 6190296 A | 03-10-1996 |
| | | | AU | 681063 B2 | 14-08-1997 |
| | | | AU | 6190396 A | 03-10-1996 |
| | | | DE | 69522666 D1 | 18-10-2001 |
| | | | DE | 69522666 T2 | 20-06-2002 |
| | | | EP | 0741937 A1 | 13-11-1996 |
| | | | JP | 9508509 T | 26-08-1997 |
| | | | WO | 9520850 A1 | 03-08-1995 |
| | | | US | 5485455 A | 16-01-1996 |
| | | | US | 5491694 A | 13-02-1996 |
| | | | US | 5790546 A | 04-08-1998 |
| WO 03090083 | A | 30-10-2003 | AU | 2003223609 A1 | 03-11-2003 |
| | | | CA | 2481901 A1 | 30-10-2003 |
| | | | EP | 1495405 A1 | 12-01-2005 |
| | | | JP | 2005523619 T | 04-08-2005 |
| US 2004264372 | A1 | 30-12-2004 | NONE | | |
| WO 03058868 | A | 17-07-2003 | AU | 2003202882 A1 | 24-07-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6665273 B1